# EUROPÄISCHE PATENTSCHRIFT

(11) **EP 1 511 646 B1**
(45) Veröffentlichungstag und Bekanntmachung des Hinweises auf die Patenterteilung: **03.05.2006**
(21) Anmeldenummer: 03732535.4
(22) Anmeldetag: 05.06.2003
(51) Int. Cl.: B60K 7/00, F41H 7/02

(54) **ELEKTRISCH ANGETRIEBENES FAHRZEUG MIT EINZELRADANTRIEB**
ELECTRICALLY-PROPELLED VEHICLE WITH INDIVIDUAL WHEEL DRIVE
VEHICULE A ENTRAINEMENT ELECTRIQUE A ROUES INDEPENDANTES

(30) Priorität: 11.06.2002 DE 10225731
(43) Veröffentlichungstag der Anmeldung: 09.03.2005
(73) Patentinhaber: ZF FRIEDRICHSHAFEN Aktiengesellschaft, 88038 Friedrichshafen (DE)
(72) Erfinder: RÖSCH, Thomas, 88048 Friedrichshafen (DE)
(86) Internationale Anmeldenummer: PCT/EP2003/005884
(87) Internationale Veröffentlichungsnummer: WO 2003/104011

(56) Entgegenhaltungen:
- EP-A- 1 024 076
- WO-A-00/20245
- WO-A-00/32462
- DE-A- 3 129 209
- FR-A- 2 510 737
- FR-A- 2 706 370
- US-A- 4 074 784
- US-A- 4 407 381

## Beschreibung

Die Erfindung betrifft ein elektrisch angetriebenes Fahrzeug mit mehreren Antriebsrädern, denen jeweils ein Antrieb mit mindestens einem Elektromotor zugeordnet ist.

Für Fahrzeuge mit elektrischen Einzelradantrieben existieren verschiedene Konzepte für die Anordnung der Antriebe im Fahrzeug.

Bei einem bekannten Konzept sind die Antriebsmotoren im Fahrzeugchassis bzw. bei gepanzerten Fahrzeugen in der Fahrzeugwanne in axialer Verlängerung der Antriebsräder angeordnet. Nachteilig bei dieser Anordnung ist, dass der Raum zwischen den Rädern von den Antriebsmotoren belegt wird und nicht anderweitig nutzbar ist.

Bei einem anderen bekannten Konzept sind die Antriebsmotoren in den Radnaben angeordnet. Dadurch bleibt der Raum zwischen den Antriebsrädern weitgehend frei von Antriebskomponenten. Nachteilig dabei ist jedoch, dass die gefederten Massen im Rad sehr hoch sind, so dass insbesondere bei hohen Geschwindigkeiten im Gelände thermische Probleme an den Dämpfungselementen auftreten. Der Bauraum in den Radnaben ist sehr begrenzt, so dass größerbauende elektrische Maschinen, wie z. B. Asynchron-Maschinen, schwer oder schlecht verwendbar sind und teure Permanentmagnetmotoren benötigt werden. Insbesondere bei militärisch genutzten Fahrzeugen kommen noch weitere nachteilige Aspekte dieses Konzepts hinzu: Bei Radnabenmotoren ist es äußerst schwierig, die Wärme- und Geräuschabstrahlung des Antriebs klein zu halten. Damit auch ein Einsatz mit teilweise unter Wasser stehenden Rädern möglich ist, ein sogenannter Wat-Betrieb, sind aufwendige Abdichtungen an der Radnabe notwendig. Es werden relativ lange Versorgungs- und Kühlleitungen benötigt, die ebenso wie der Antriebsmotor selbst relativ schlecht geschützt gegenüber Beschuß und Umwelteinflüssen sind.

Die DE 196 17 165 A1 und die EP 0 966 361 B1 zeigen elektrisch angetriebene Fahrzeuge mit einem Chassis und mehreren Antriebsrädern, denen jeweils ein Antrieb mit mindestens einem Elektromotor zugeordnet ist. Dabei ist der Elektromotor, zumindest teilweise, in dem vom Antriebsrad eingenommenen axialen Bauraum radial außerhalb des Antriebsrads angeordnet. Die triebliche Verbindung des Antriebsmotors mit dem Antriebsrad erfolgt mit einem Stirnrad-Verbindungsgetriebe, dessen Gehäuse auf der zur Fahrzeugmitte zugewandten Seite von Antriebsrad und Antriebsmotor angeordnet ist. Diese Anordnung ermöglicht den Einsatz auch von größerbauenden Asynchron-Maschinen, ohne dass der Bauraum zwischen den Antriebsrädern wesentlich eingeschränkt würde. Der Nachteil dieser Anordnungen besteht darin, dass die gefederten Massen ähnlich hoch wie beim Radnabenantrieb sind und dass nur ein begrenzter Federweg zur Verfügung steht. Diese Konzepte sind auch nicht geeignet für gelenkte Räder, so dass sie nicht für mehrachsgetriebene Geländefahrzeuge in Frage kommen.

Ein Fahrzeug nach dem Oberbegriff der Ansprüche 1 und 3 ist aus der WO 00/32462 A bekannt.

Der Erfindung liegt daher die Aufgabe zugrunde, ein elektrisch angetriebenes Fahrzeug anzugeben, das für hohe Geschwindigkeiten im Gelände geeignet ist, bei dem die Räder geringe gefederte Massen und einen hohen Federweg aufweisen, das einen breiten Durchgang im Fahrzeuginnern, auch beim Einsatz von längerbauenden Asynchron-Motoren, ermöglicht und das außerdem für lenkbare Räder geeignet ist. Darüber hinaus soll die Wärme- und Geräuschabstrahlung nach außen gering und das Durchfahren von seichtem Wasser soll möglich sein.

Diese Aufgabe wird gelöst durch ein, auch die Merkmale der kennzeichnenden Teile der Ansprüche 1 und 3 aufweisendes, elektrisch angetriebenes Fahrzeug. Vorteilhafte Weiterbildungen der Erfindung sind durch die Unteransprüche gegeben.

Es sind also bei dem Fahrzeug, bei dem der jedem Antriebsrad zugeordnete Elektromotor zumindest teilweise in dem vom Antriebsrad eingenommenen axialen Bauraum außerhalb des Antriebsrads angeordnet ist, das Gehäuse des Verbindungsgetriebes, welches Elektromotor und Antriebsrad trieblich verbindet, und der Antriebsmotor starr mit der Fahrzeugwanne verbunden. Zwischen dem Abtrieb des Verbindungsgetriebes und dem Antriebsrad ist eine Gelenkwelle vorgesehen, die mittels eines Gelenks mit dem Abtrieb des Verbindungsgetriebes verbunden ist. Es wird eine sehr gute Bauraumausnutzung erzielt, die gefederten Massen der Antriebsräder sind sehr gering, und der Elektromotor ist geschützt innerhalb der Fahrzeugwanne angeordnet.

In einer vorteilhaften Ausgestaltung sind Dichtungen vorgesehen, so dass der Elektromotor wassergeschützt innerhalb der Fahrzeugwanne angeordnet ist, und der Bereich des Elektromotors trocken bleibt, wenn das Antriebsrad ganz oder teilweise unter Wasser ist.

Bei einer Variante dieser Ausgestaltung durchdringt das Gehäuse des Verbindungsgetriebes die Fahrzeugwanne, und zwischen der Fahrzeugwanne und dem Gehäuse des Verbindungsgetriebes ist die Dichtung vorgesehen. Alternativ ist es aber auch möglich, das gesamte Verbindungsgetriebe wassergeschützt innerhalb der Fahrzeugwanne anzuordnen, so dass nur die Gelenkwelle, die die Fahrzeugwanne durchdringt, durch eine Dichtung abgedichtet werden muß.

Die erfindungsgemäße Anordnung des Einzelradantriebs bringt keine Einschränkungen bezüglich der Art der Radaufhängung mit sich. So ist es möglich, auch gelenkte Antriebsräder einer Achse des Fahrzeugs, die schwenkbar aufgehängt und mit einer Lenkeinrichtung versehen sind, vorzusehen. Ebenfalls findet keine Einschränkung bezüglich der Anzahl der Räder und Achsen statt.

Weitere Ausgestaltungen der Erfindung werden anhand der beiliegenden Figuren erläutert.
Darin zeigen schematisch:
- Fig. 1: eine Draufsicht auf einen Ausschnitt einer Fahrzeugwanne mit einem erfindungsgemäßen Einzelradantrieb;
- Fig. 2: eine Draufsicht auf einen Triebstrang eines erfindungsgemäßen Einzelradantriebs;
- Fig. 3: eine Seitenansicht eines Verbindungsgetriebes;
- Fig. 4: eine Draufsicht auf ein Fahrzeug mit acht Einzelradantrieben;
- Fig. 5: eine Seitenansicht eines Fahrzeugs gemäß Fig. 4;
- Fig. 6: eine Draufsicht auf ein Fahrzeug mit acht Einzelradantrieben;
- Fig. 7: eine Seitenansicht eines Fahrzeugs gemäß Fig. 6;
- Fig. 8: eine Draufsicht auf ein Fahrzeug mit acht Einzelradantrieben;
- Fig. 9: eine Seitenansicht eines Fahrzeugs gemäß Fig. 8;
- Fig. 10: eine Draufsicht eines Fahzeugs mit acht Einzelradantrieben und
- Fig. 11: eine Seitenansicht eines Fahrzeugs gemäß Fig. 10.

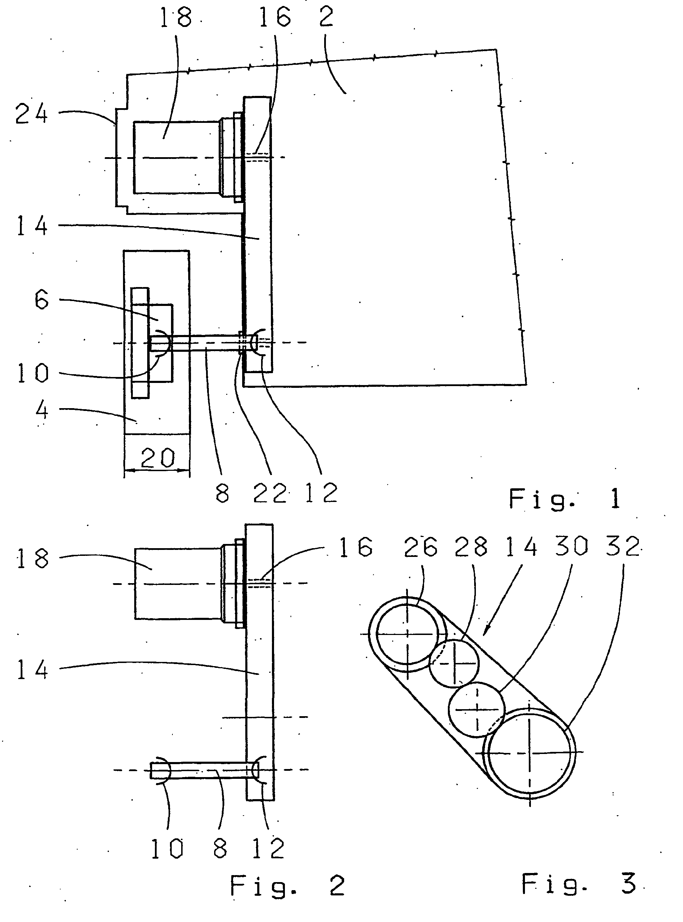

In Fig. 1 ist mit 2 ein hinterer linker Ausschnitt aus einer Fahrzeugwanne eines mehrachsigen Geländefahrzeugs bezeichnet. Im Antriebsrad 4 ist ein als Planetengetriebe ausgebildetes Radkopfgetriebe 6 angeordnet. Die Gelenkwelle 8 weist an ihren beiden Enden Gelenke 10, 12 auf, welche eine Einfederbewegung und/oder einen Lenkeinschlag des Rades 6 ermöglichen. Am Gelenk 10 ist die Gelenkwelle 8 trieblich mit dem Eingang des Radkopfgetriebes 6 verbunden. Am Gelenk 12 ist die Gelenkwelle 8 mit dem Ausgang des Verbindungsgetriebes 14 verbunden, dessen Gehäuse starr mit der Fahrzeugwanne 2 verbunden ist. Eingangsseitig ist das Verbindungsgetriebe 14 mit der Motorwelle 16 des Antriebsmotors 18 verbunden. Der Antriebsmotor 18 ist mit seinem zur Fahrzeugaußenseite gerichteten Ende teilweise in dem vom Antriebsrad 4 eingenommenen axialen Bauraum 20 radial außerhalb des Antriebsrads angeordnet. Das Gehäuse des Verbindungsgetriebes 14 ist auf der zur Fahrzeugmitte zugewandten Seite von Antriebsrad 4 und Antriebsmotor 18 angeordnet. Der Bereich der Fahrzeugwanne innerhalb des Verbindungsgetriebes bleibt frei von Bauteilen des Antriebs, so dass ein breiter Durchgang in der Fahrzeugmitte geschaffen wird. Die ungefederte Masse des Antriebsrads 4 ist gering, da das Verbindungsgetriebe 14 und der Antriebsmotor 18 der abgefederten Fahrzeugwanne 2 zugeordnet sind. Im Bereich des Durchbruchs der Gelenkwelle 8 durch die Fahrzeugwanne 2 ist eine Dichtungsmanschette 22 vorgesehen. Der Antriebsmotor 18 und das Verbindungsgetriebe 16 sind also wassergeschützt innerhalb der Fahrzeugwanne angeordnet und bleiben trocken, auch wenn das Antriebsrad 4 ganz oder teilweise unter Wasser steht. Die Fahrzeugwanne 2 weist an der Außenseite in axialer Verlängerung des Antriebsmotors 18 eine Öffnung auf, so dass der Antriebsmotor für Montage und Wartungszwecke von außen zugänglich ist. Diese Öffnung ist durch einen Deckel 24 veschließbar. Der Antriebsmotor 18 und das Verbindungsgetriebe 14 sind vor Umwelteinflüssen und Beschuß vollständig geschützt innerhalb der gepanzerten Fahrzeugwanne 2 angeordnet. An dieser Stelle ist auch die unerwünschte Wärme- und Geräuschabstrahlung nach außen sehr gering.

In Fig. 2 sind gleiche Positionen mit gleichen Bezugszeichen versehen wie in Fig. 1.

Das Verbindungsgetriebe 14 gemäß Fig. 3 ist als Stirnräderkette mit hier beispielhaft angegebenen, insgesamt vier Stirnrädern 26, 28, 30, 32 ausgebildet, welche drehbar im Gehäuse des Verbindungsgetriebes 14 gelagert sind. Das Verbindungsgetriebe 14 ist mit geringem Aufwand in verschiedenen Varianten mit unterschiedlichen Übersetzungen herstellbar, so dass Anpassungen der Gesamtübersetzungen sehr leicht zu bewerkstelligen sind. In Abhängigkeit vom Achsabstand ist auch eine andere Anzahl an Stirnrädern möglich und liegt in einer weiteren geeigneten Ausführung bei drei Stirnrädern. Anstelle einer Stirnräderkette kann auch ein mit einem Ketten- oder Riementrieb versehenes Umschlingungsgetriebe verwendet werden.

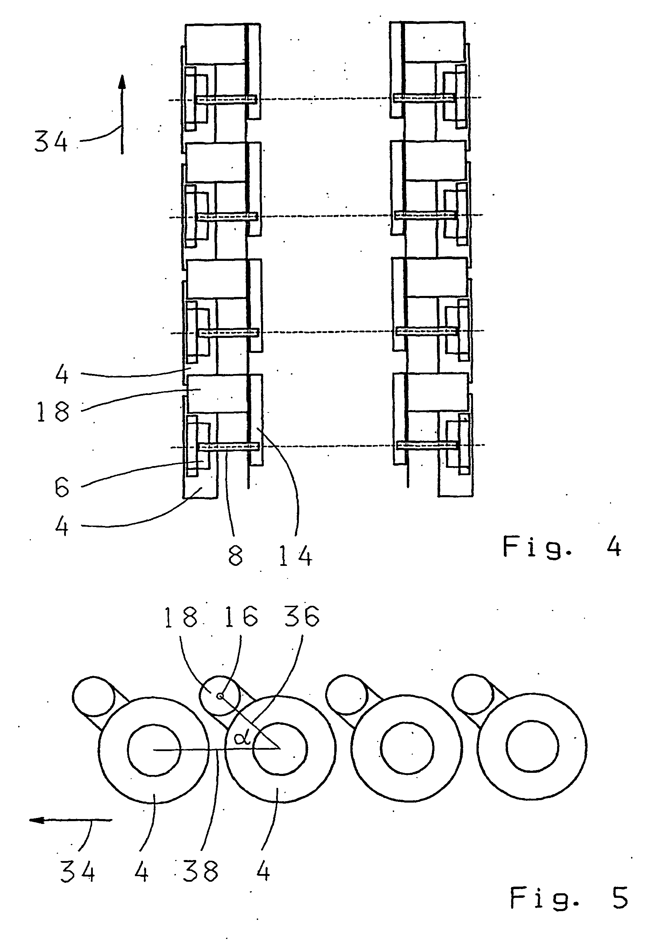

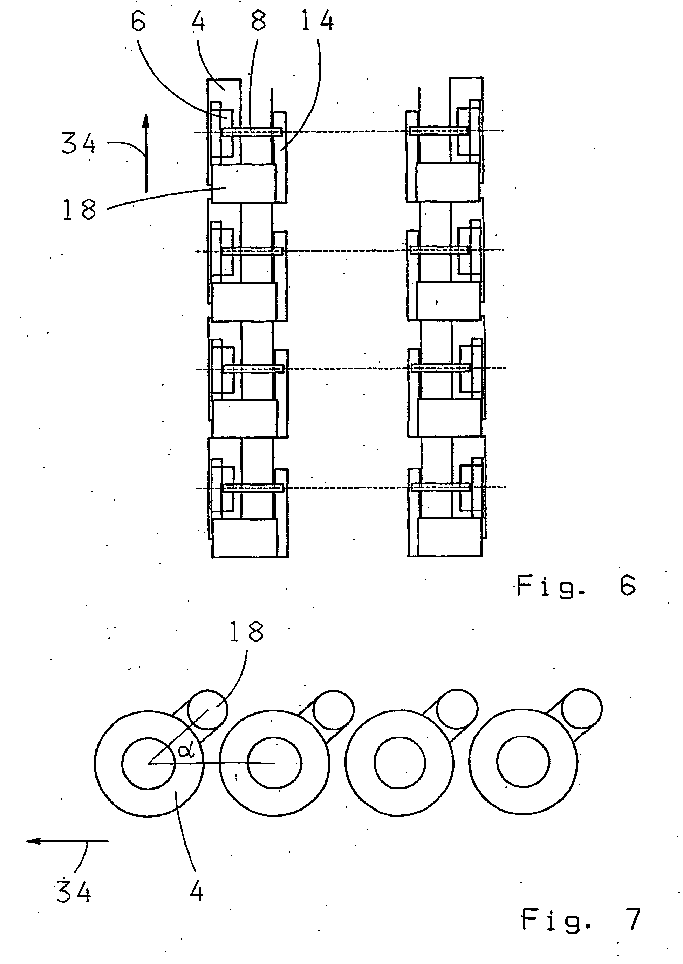

In der Darstellung gemäß Fig. 4 sind wiederum gleiche Positionen mit gleichen Bezugszeichen versehen wie in Fig. 1. Bei diesem Fahrzeug ist jedem Rad 4 des Fahrzeugs ein Antriebsmotor 18 und ein Verbindungsgetriebe 14 zugeordnet. Die Antriebsmotoren 18 sind jeweils im Bauraum oberhalb der Drehachsen der Antriebsräder 4 zwischen zwei benachbarten Antriebsrädern in Fahrtrichtung 34 vor dem zugeordneten Antriebsrad 4 angeordnet. Dabei schließt eine Verbindungslinie 36 zwischen der Drehachse eines Antriebsrads 4 und der Drehachse der Antriebswelle 16 des Antriebsmotors 18 mit einer Verbindungslinie 38 der Drehachsen zweier benachbarter Antriebsräder 4 einen Winkel α ein, der vorzugsweise zwischen 30° und 75° beträgt (Fig. 5).

Fig. 6 und 7 zeigen eine Konstellation, bei welcher die Antriebsmotoren 18 jeweils hinter der Drehachse des zugeordneten Antriebsrads 4 liegen.

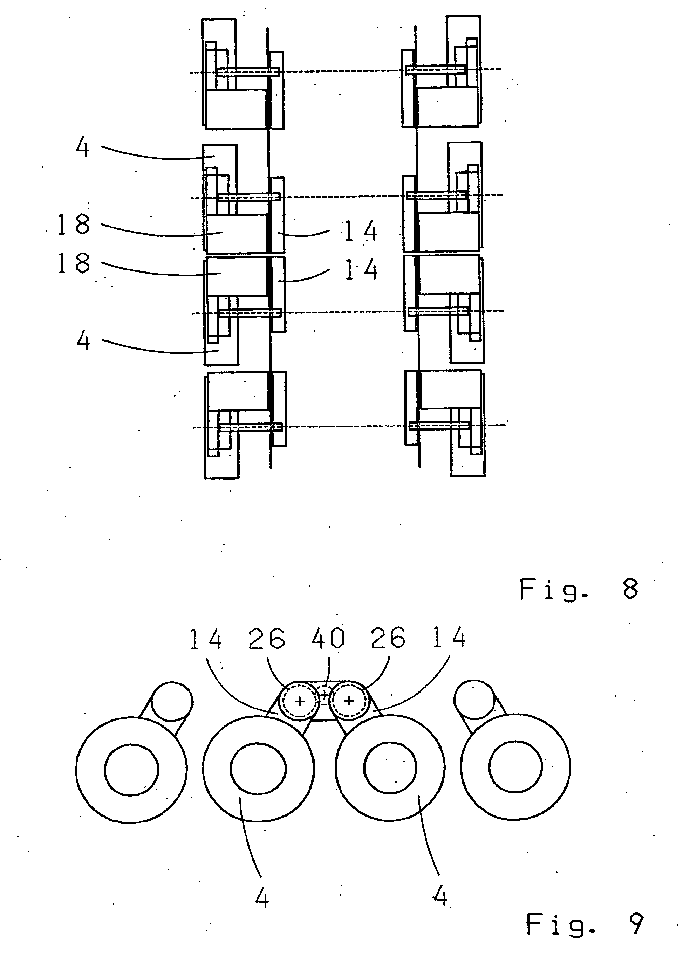

In der in Fig. 8 und 9 dargestellten Konstellation sind die Verbindungsgetriebe 14 mit den Antriebsmotoren 18 der mittleren, benachbart hintereinanderliegender Antriebsräder 4 einander zugeneigt, so dass die Drehachsen der Antriebswellen der Antriebsmotoren in horizontaler Richtung zwischen den Drehachsen der Antriebsräder 4 liegen. Diese Konstellation ist dann besonders vorteilhaft, wenn aus Redundanzgründen die Antriebsmotoren 18 der benachbarten Antriebsräder 4 trieblich miteinander koppelbar oder gekoppelt sein sollen, wie in Fig. 9 durch die Stirnräder 26, 40 angedeutet ist.

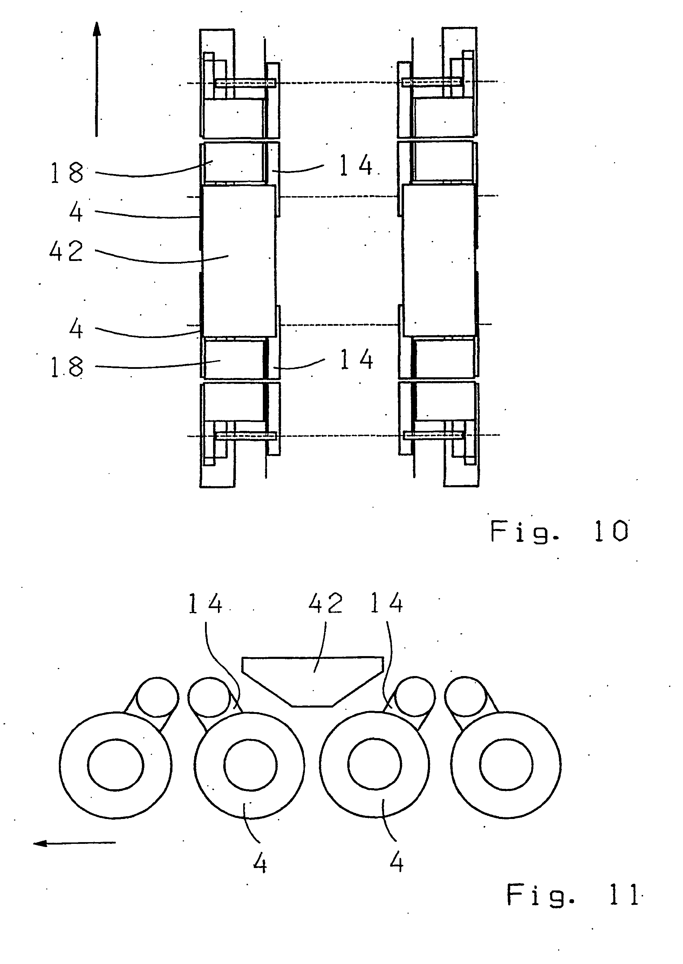

Alternativ dazu zeigen Fig. 10 und 11 eine Konstellation, bei der die Verbindungsgetriebe 14 mit den Antriebsmotoren 18 zweier benachbart hintereinanderliegender Antriebsräder 4 voneinander weggeneigt sind. Auf diese Weise wird im Bereich oberhalb und zwischen den beiden Antriebsrädern 4 ein Freiraum gebildet, der für größere Aggregate, wie z. B. die Energieversorgungseinheit 42 für die elektrischen Antriebsmotoren 18, zur Verfügung steht. An dieser Stelle ist die Energieversorgungseinheit 42, typischerweise bestehend aus einem Dieselmotor und einem Generator, gut von außen durch entsprechende Wartungsöffnungen zugänglich, und der Durchgang längs der Mitte des Fahrzeugs bleibt frei.

### Bezugszeichen

- 2: Fahrzeugwanne
- 4: Antriebsrad
- 6: Radkopfgetriebe
- 8: Gelenkwelle
- 10: Gelenk
- 12: Gelenk
- 14: Verbindungsgetriebe
- 16: Welle
- 18: Antriebsmotor
- 20: axialer Bauraum
- 22: Dichtungsmanschette
- 24: Deckel
- 26, 28,: Stirnräder
- 30, 32: Stirnräder
- 34: Fahrtrichtung
- 36: Verbindungslinie
- 38: Verbindungslinie
- 40: Stirnrad
- 42: Energieversorgungseinheit

## Patentansprüche

1. Elektrisch angetriebenes Fahrzeug mit einer Fahrzeugwanne (2) und mehreren Antriebsrädern (4), denen jeweils ein Antrieb mit mindestens einem elektrischen Antriebsmotor (18) zugeordnet ist, wobei zur trieblichen Verbindung des Antriebsmotors (18) mit dem Antriebsrad (4) ein Verbindungsgetriebe (14) mit einem Gehäuse vorgesehen ist, welches auf der zur Fahrzeugmitte zugewandten Seite von Antriebsrad (4) und Antriebsmotor (18) angeordnet ist, wobei das Gehäuse des Verbindungsgetriebes (14) starr mit der Fahrzeugwanne (2) verbunden ist und wobei zwischen einem Abtrieb des Verbindungsgetriebes und dem Antriebsrad eine Gelenkwelle (8) vorgesehen ist, die mittels eines Gelenks (12) mit dem Abtrieb des Verbindungsgetriebes (14) verbunden ist, **dadurch gekennzeichnet, dass** der Antriebsmotor (18), zumindest teilweise, in dem vom Antriebsrad (4) eingenommenen axialen Bauraum (20) radial außerhalb des Antriebsrads (4) angeordnet ist und dass die Verbindungsgetriebe (14) mit den Antriebsmotoren (18) zweier benachbart hintereinanderliegender Antriebsräder (4) einander zugeneigt sind, so dass die Drehachsen der Antriebswellen der Antriebsmotoren (18) in horizontaler Richtung zwischen den Drehachsen der Antriebsräder (4) liegen.

2. Fahrzeug nach Anspruch 1, **dadurch gekennzeichnet, dass** die Antriebsmotoren (18) der benachbarten Antriebsräder (4) trieblich miteinander koppelbar oder gekoppelt sind.

3. Elektrisch angetriebenes Fahrzeug mit einer Fahrzeugwanne (2) und mehreren Antriebsrädern (4), denen jeweils ein Antrieb mit mindestens einem elektrischen Antriebsmotor (18) zugeordnet ist, wobei zur trieblichen Verbindung des Antriebsmotors (18) mit dem Antriebsrad (4) ein Verbindungsgetriebe (14) mit einem Gehäuse vorgesehen ist, welches auf der zur Fahrzeugmitte zugewandten Seite von Antriebsrad (4) und Antriebsmotor (18) angeordnet ist, wobei das Gehäuse des Verbindungsgetriebes (14) starr mit der Fahrzeugwanne (2) verbunden ist und wobei zwischen einem Abtrieb des Verbindungsgetriebes und dem Antriebsrad eine Gelenkwelle (8) vorgesehen ist, die mittels eines Gelenks (12) mit dem Abtrieb des Verbindungsgetriebes (14) verbunden ist, **dadurch gekennzeichnet, dass** der Antriebsmotor (18), zumindest teilweise, in dem vom Antriebsrad (4) eingenommenen axialen Bauraum (20) radial außerhalb des Antriebsrads (4) angeordnet ist und dass die Verbindungsgetriebe (14) mit den Antriebsmotoren (18) zweier benachbart hintereinanderliegender Antriebsräder (4) voneinander weggeneigt sind, so dass im Bereich oberhalb und zwischen den beiden Antriebsrädern (4) ein Freiraum gebildet wird.

4. Fahrzeug nach Anspruch 3, **dadurch gekennzeichnet, dass** in dem Freiraum zumindest Teile einer Energieversorgungseinheit (42) für die elektrischen Antriebsmotoren (18) angeordnet sind.

5. Fahrzeug nach einem der vorhergehenden Ansprüche, **dadurch gekennzeichnet, dass** dass eine Verbindungslinie (36) zwischen der Drehachse eines Antriebsrads (4) und der Drehachse einer Antriebswelle des Antriebsmotors (18) mit einer Verbindungslinie (38) der Drehachsen zweier benachbarter Antriebsräder (4) einen Winkel (α) einschließt, der zwischen 30° und 75° beträgt.

6. Fahrzeug nach einem der vorhergehenden Ansprüche, **dadurch gekennzeichnet, dass** der Antriebsmotor wassergeschützt innerhalb der Fahrzeugwanne (2) angeordnet ist, so dass der Bereich des Antriebsmotors (18) trocken bleibt, wenn das Antriebsrad (4) ganz oder teilweise unter Wasser ist.

7. Fahrzeug nach Anspruch 6, **dadurch gekennzeichnet, dass** das Gehäuse des Verbindungsgetriebes (14) die Fahrzeugwanne (2) durchdringt und dass zwischen der Fahrzeugwanne (2) und dem Gehäuse des Verbindungsgetriebes (14) eine Dichtung vorgesehen ist.

8. Fahrzeug nach Anspruch 6, **dadurch gekennzeichnet, dass** das gesamte Verbindungsgetriebe (14) wassergeschützt innerhalb der Fahrzeugwanne (2) angeordnet ist, und die Gelenkwelle (8) die Fahrzeugwanne (2) durchdringt und zwischen der Gelenkwelle (8) und der Fahrzeugwanne (2) eine Dichtungsmanschette (22) vorgesehen ist.

9. Fahrzeug nach einem der vorhergehenden Ansprüche **dadurch gekennzeichnet, dass** zumindest zwei Antriebsräder (4), die einer Achse des Fahrzeugs zugeordnet sind, schwenkbar aufgehängt und von einer Lenkeinrichtung lenkbar sind.

10. Fahrzeug nach einem der vorhergehenden Ansprüche **dadurch gekennzeichnet, dass** das Antriebsrad (4) ein Radkopfgetriebe (6) aufnimmt, das antriebsseitig mit der Gelenkwelle (8) verbunden ist.

11. Fahrzeug nach einem der Ansprüche 1 bis 10, **dadurch gekennzeichnet, dass** das Verbindungsgetriebe (4) als Stirnräderkette (26, 28, 30, 32) ausgebildet ist.

12. Fahrzeug nach einem der Ansprüche 1 bis 10, **dadurch gekennzeichnet, dass** das Verbindungsgetriebe als Umschlingungsgetriebe ausgebildet ist.

13. Fahrzeug nach einem der vorhergehenden Ansprüche, **dadurch gekennzeichnet, dass** die Fahrzeugwanne (2) an der Außenseite im Bereich des Antriebsmotors (18) eine durch einen Deckel (24) verschließbare Öffnung aufweist.

14. Fahrzeug nach einem der vorhergehenden Ansprüche, **dadurch gekennzeichnet, dass** jedem Rad (4) des Fahrzeugs wenigstens ein Antriebsmotor (18) und ein Verbindungsgetriebe (14) zugeordnet ist.

## Claims

1. Electrically driven vehicle with a vehicle pan (2) and several driving wheels (4), each of which is assigned a drive with at least one electric drive motor (18), and in order to provide a driving connection for the drive motor (18) to the driving wheel (4), a connecting transmission (14) with a housing is provided, which is disposed on the side of the driving wheel (4) and drive motor (18) directed towards the vehicle centre, the housing of the connecting transmission (14) being rigidly connected to the vehicle pan (2), and, provided between an output of the connecting transmission and the driving wheel, is an articulated shaft (8) which is connected to the output of the connecting transmission (14) by means of an articulated joint (12), **characterised in that** the drive motor (18) is at least partially disposed in the axial mounting space (20) occupied by the driving wheel (4), radially to the outside of the driving wheel (4), and the connecting transmissions (14) incorporating the drive motors (18) of two adjacent driving wheels (4) disposed one behind the other are inclined towards one another so that the rotation axes of the drive shafts of the drive motors (18) lie in the horizontal direction between the rotation axes of the driving wheels (4).

2. Vehicle as claimed in claim 1, **characterised in that** the drive motors (18) of the adjacent driving wheels (4) can be or are drivingly coupled with one another.

3. Electrically driven vehicle with a vehicle pan (2) and several driving wheels (4), each of which is assigned a drive with at least one electric drive motor (18), and in order to provide a driving connection for the drive motor (18) to the driving wheel (4), a connecting transmission (14) with a housing is provided, which is disposed on the side of the driving wheel (4) and drive motor (18) directed towards the vehicle centre, the housing of the connecting transmission (14) being rigidly connected to the vehicle pan (2), and, provided between an output of the connecting transmission and the driving wheel, is an articulated shaft (8) which is connected to the output of the connecting transmission (14) by means of an articulated joint (12), **characterised in that** the drive motor (18) is disposed at least partially in the axial mounting space (20) occupied by the driving wheel (4), radially to the outside of the driving wheel (4), and the connecting transmissions (14) incorporating the drive motors (18) of two adjacent driving wheels (4) disposed one behind the other are inclined away from one another so that a free space is formed in the region above and between the two driving wheels (4).

4. vehicle as claimed in claim 3, **characterised in that** at least parts of the power supply unit (42) for the electric drive motors (18) are disposed in the free space.

5. Vehicle as claimed in one of the preceding claims, **characterised in that** a connecting line (36) between the rotation axis of a driving wheel (4) and the rotation axis of a drive shaft of the drive motor (18) to a connecting line (38) of the rotation axis of two adjacent driving wheels (4) subtends an angle (α) of between 30° and 75°.

6. Vehicle as claimed in one of the preceding claims, **characterised in that** the drive motor is disposed inside the vehicle pan (2) protected from water so that the region of the drive motor (18) remains dry if the driving wheel (4) is totally or partially under water.

7. Vehicle as claimed in claim 6, **characterised in that** the housing of the connecting transmission (14) extends through the vehicle pan (2) and a seal is provided between the vehicle pan (2) and the housing of the connecting transmission (14).

8. Vehicle as claimed in claim 6, **characterised in that** the entire connecting transmission (14) is disposed inside the vehicle pan (2) protected from water and the articulated shaft (8) extends through the vehicle pan (2) and a sealing collar (22) is provided between the articulated shaft (8) and the vehicle pan (2).

9. Vehicle as claimed in one of the preceding claims, **characterised in that** at least two driving wheels (4) assigned to one axle of the vehicle are suspended so as to be pivotable and can be steered by means of a steering mechanism.

10. Vehicle as claimed in one of the preceding claims, **characterised in that** the driving wheel (4) accommodates a wheel head transmission (6) which is connected to the articulated shaft (8) at the drive end.

11. Vehicle as claimed in one of claims 1 to 10, **characterised in that** the connecting transmission (4) is provided in the form of a spur gear chain (26, 28, 30, 32).

12. vehicle as claimed in one of claims 1 to 10, **characterised in that** the connecting transmission is provided in the form of a contact transmission.

13. Vehicle as claimed in one of the preceding claims, **characterised in that** the vehicle pan (2) has an opening on the external face in the region of the drive motor (18) which can be closed by a cover (24).

14. Vehicle as claimed in one of the preceding claims, **characterised in that** at least one drive motor (18) and a connecting transmission (14) is assigned to each wheel (4) of the vehicle.

## Revendications

1. Véhicule à entraînement électrique avec un carter de véhicule (2) et plusieurs roues motrices (4), un entraînement avec au moins un moteur d'entraînement électrique (18) étant associé à chacune de ces roues motrices, dans lequel une transmission de liaison (14) avec un carter est prévue pour la liaison d'entraînement du moteur d'entraînement (18) avec la roue motrice (4), qui se trouve du côté de la roue motrice (4) et du moteur d'entraînement (18) orienté vers le centre du véhicule, le carter de la transmission de liaison (14) étant relié de manière rigide au carter du véhicule (2) et un arbre articulé (8), relié à la sortie de la transmission de liaison (14) à l'aide d'une articulation (12), étant prévu entre une sortie de la transmission de liaison et la roue motrice, **caractérisé en ce que** le moteur d'entraînement (18) se trouve au moins partiellement dans l'espace (20) axial occupé par la roue motrice (4) et est décalé radialement par rapport à la roue motrice (4), et **en ce que** la transmission de liaison (14) est inclinée vers les moteurs d'entraînement (18) de deux roues motrices (4) successives de façon à ce que les axes de rotation des arbres d'entraînement des moteurs d'entraînement (18) se trouvent dans une direction horizontale entre les axes de rotation des roues motrices (4).

2. Véhicule selon la revendication 1 **caractérisé en ce que** les moteurs d'entraînement (18) des roues motrices adjacentes (4) sont couplés ou peuvent être couplés entre eux avec une liaison d'entraînement.

3. Véhicule à entraînement électrique avec un carter de véhicule (2) et plusieurs roues motrices (4) à chacune desquelles est associé un entraînement avec au moins un moteur d'entraînement électrique (18), dans lequel une transmission de liaison (14) avec un carter est prévue pour la liaison d'entraînement du moteur d'entraînement (18) avec la roue motrice (4), qui se trouve du côté de la roue motrice (4) et du moteur d'entraînement (18) orienté vers le centre du véhicule, le carter de la transmission de liaison (14) étant relié de manière rigide au carter du véhicule (2) et un arbre articulé (8), relié à la sortie de la transmission de liaison (14) à l'aide d'une articulation (12), étant prévu entre une sortie de la transmission de liaison et la roue motrice, **caractérisé en ce que** le moteur d'entraînement (18) se trouve au moins partiellement dans l'espace (20) axial occupé par la roue motrice (4) et est décalé radialement par rapport à la roue motrice (4), et **en ce que** la transmission de liaison (14) est inclinée de manière opposée par rapport aux moteurs d'entraînement (18) de deux roues motrices (4) successives de façon à ce qu'un un espace libre soit formé dans la zone au-dessus et entre les deux roues motrices (4).

4. Véhicule selon la revendication 3, **caractérisé en ce que**, dans l'espace libre se trouvent au moins des parties d'une unité d'alimentation en énergie (42) pour les moteurs d'entraînement électriques (18).

5. Véhicule selon l'une des revendications précédentes, **caractérisé en ce qu**'une ligne de liaison (36) entre l'axe de rotation d'une roue motrice (4) et l'axe de rotation d'un arbre d'entraînement du moteur d'entraînement (18) forme avec une ligne de liaison (38) des axes de rotation de deux roues motrices (4) adjacentes un angle (α) qui est entre 30° et 75°.

6. Véhicule selon l'une des revendications précédentes, **caractérisé en ce que** le moteur d'entraînement est logé de manière étanche à l'intérieur du carter du véhicule (2), de façon à ce que la zone du moteur d'entraînement (18) reste sèche lorsque la roue motrice (4) se trouve entièrement ou partiellement sous l'eau.

7. Véhicule selon la revendication 6, **caractérisé en ce que** le carter de la transmission de liaison (14) traverse le carter du véhicule (2) et **en ce que**, entre le carter du véhicule (2) et le carter de la transmission de liaison (14), se trouve un joint d'étanchéité.

8. Véhicule selon la revendication 6, **caractérisé en ce que** l'ensemble de la transmission de liaison (14) est logé de manière étanche à l'intérieur du carter du véhicule, et l'arbre articulé (8) traverse le carter du véhicule (2) et une garniture d'étanchéité (22) se trouve entre l'arbre articulé (8) et le carter du véhicule (2).

9. Véhicule selon l'une des revendications précédentes, **caractérisé en ce qu'**au moins deux roues motrices (4), associées à un essieu du véhicule, sont suspendues de manière pivotante et peuvent être orientées à l'aide d'un dispositif de direction.

10. Véhicule selon l'une des revendications précédentes, **caractérisé en ce que** dans la roue motrice (4) est logée une transmission de tête de roue (6) qui est reliée du côté de l'entraînement à l'arbre articulé (8).

11. Véhicule selon l'une des revendications 1 à 10, **caractérisé en ce que** la transmission de liaison (4) est conçue comme une chaîne de pignons droits (26, 28, 30, 32).

12. Véhicule selon l'une des revendications 1 à 10, **caractérisé en ce que** la transmission de liaison est conçue comme une transmission par enroulement.

13. Véhicule selon l'une des revendications précédentes, **caractérisé en ce que** le carter du véhicule (2) comprend, à l'extérieur, au niveau du moteur d'entraînement (18), une ouverture pouvant être fermée par un couvercle (24).

14. Véhicule selon l'une des revendications précédentes, **caractérisé en ce qu**'à chaque roue (4) du véhicule sont associés au moins un moteur d'entraînement (18) et une transmission de liaison (14).
